# EUROPÄISCHE PATENTANMELDUNG

(11) **EP 1 314 589 A2**
(43) Veröffentlichungstag der Anmeldung: **28.05.2003**
(21) Anmeldenummer: 02024326.7
(22) Anmeldetag: 02.11.2002
(51) Int. Cl.: B60H 1/00

(54) **Heiz- und/oder Klimaanlage**

(30) Priorität: 23.11.2001 DE 10157497
(71) Anmelder: DaimlerChrysler AG, 70567 Stuttgart (DE)
(72) Erfinder: Currle, Joachim, Dr., 70327 Stuttgart (DE); Frühauf, Frank, Dr., 73773 Aichwald (DE); Wertenbach, Jürgen, 70734 Fellbach (DE)

(57) **Zusammenfassung**

Die Erfindung betrifft eine Heiz- und/oder Klimaanlage (1) für den Innenraum (4) von Fahrzeugen, mit einer Luftfördervorrichtung (11), einem Wärmetauscher (13) und einem Verdampfer (12).

Um die Heiz- und/oder Klimaanlage (1) möglichst kompakt bauen zu können und dabei einen guten Wirkungsgrad zu erzielen, wird vorgeschlagen, zumindest ein Luftförderaggregat der Luftfördervorrichtung (11) als Scheibenlüfter oder Disk-Fan (2) auszubilden.

## Beschreibung

Die Erfindung betrifft eine Heiz- und/oder Klimaanlage nach dem Oberbegriff des Anspruchs 1.

In der Praxis müssen solche Heiz- und/oder Klimaanlagen gewisse Mindestanforderungen bezüglich zu fördernder Luftmenge und kleinem Bauraum erfüllen. Da ein Radiallüfter Eigenschaften aufweist die bei kleinem Volumen eine hohe Luftförderung unterstützen, weisen Heiz- und/oder Klimaanlagen einen oder mehrerer Radiallüfter auf.

So ist aus der DE 37 38 425 A1 eine Klimatisierungsvorrichtung für Kraftfahrzeuge mit einem Heizkörper, einem Verdampfer und einem Lüfter bekannt. Der Lüfter ist als Radiallüfter ausgebildet, der aus Platzgründen von dem Heizkörper radial umschlossen ist. Diese Konstruktion ist konstruktiv relativ aufwendig.

Aus der EP 0 529 099 B1 ist ein Scheibenlüfter bekannt. Dieser Scheibenlüfter weist ein Paket aus mehreren parallelen Scheiben auf, die von einem Motor angetrieben werden. Ein solcher Scheibenlüfter hat den Nachteil, dass er einen nur geringen Wirkungsgrad aufweist und somit eine verhältnismäßig hohe Antriebsleistung benötigt.

Der Erfindung liegt die Aufgabe zugrunde, eine Heiz- und/oder Klimaanlage für einen Fahrzeuginnenraum zu schaffen, die geringen Bauraum beansprucht und konstruktiv einfach aufgebaut ist. Insbesondere soll eine Heiz- und/oder Klimaanlage geschaffen werden, die einen guten Wirkungsgrad insbesondere bei der Luftförderung aufweist.

Diese Aufgabe wird erfindungsgemäß durch eine Heiz- und/oder Klimaanlage nach den Merkmalen des Anspruchs 1 gelöst.

Die Heiz- und/oder Klimaanlage weist eine Luftfördervorrichtung mit einem oder mehreren Luftförderaggregaten auf. Zumindest ein Luftförderaggregat ist als sogenannter Disk-Fan oder Scheibenlüfter ausgebildet. Der Disk-Fan oder Scheibenlüfter weist ein Paket bestehend aus einer Mehrzahl paralleler Scheiben auf, die mit geringem Abstand nebeneinander auf einer Welle angeordnet sind und gemeinsam durch einen Antriebsmotor angetrieben werden. Es hat sich überraschenderweise gezeigt, dass die Ausbildung eines Luftförderaggregates als Scheibenlüfter keine Nachteile hinsichtlich Bauvolumen und/oder Wirkungsgrad bringt sondern etliche Vorteile birgt. Der Scheibenlüfter oder Disk-Fan ist im Betrieb sehr leise, so dass Maßnahmen zur Geräuschdämmung reduziert oder ganz entfallen können. Bei dem normalerweise verwendeten Radiallüfter, sind dagegen Maßnahmen zur Geräuschdämmung obligatorisch. Solche Maßnahmen beanspruchen aber zusätzlichen Bauraum und weisen einen erheblichen Luftwiderstand auf, so dass insgesamt der Wirkungsgrad negativ beeinflusst wird.

Je nach Anforderung kann der Disk-Fan oder Scheibenlüfter entweder als zentral ansaugendes und tangential abblasendes Luftförderaggregat oder als tangential ansaugendes und tangential abblasendes Luftförderaggregat ausgebildet sein. Dadurch können zusätzliche Maßnahmen zur Luftumlenkung entfallen, da der Disk-Fan an die erforderlichen Luftförderrichtungen anpassbar ist. Die erforderliche Länge der Luftkanäle und die Anzahl der verlustbehafteten Windungen können somit reduziert werden.

Von Vorteil ist auch, dass die Förderrichtung des Disk-Fans umschaltbar ist. Durch Ändern der Drehrichtung des Scheibenpakets kann die Förderrichtung des Disk-Fans umgedreht werden. Somit kann der Disk-Fan durch einfaches Ändern der Drehrichtung zum Belüften und/oder Entlüften eines Fahrzeuginnenraumes eingesetzt werden.

In einer Ausführung ist insbesondere vorgesehen, dass der Disk-Fan zum Trocknen des Verdampfers ausgebildet ist. Bei Kühlbetrieb schlägt sich an dem Verdampfer Kondenswasser nieder, so dass dieser feucht wird und nach Abschalten der Kühlung Feuchtigkeit mit dem Luftstrom in das Fahrzeuginnere abgeben kann. Um dem vorzubeugen ist vorgesehen, den Disk-Fan durch Umkehr der Förderrichtung zum Trocknen des Verdampfers einzusetzen. Dabei zieht der Disk-Fan trockene Luft aus dem Fahrzeuginnenraum ab und führt diese durch den Verdampfer hindurch in das Freie, wobei dieser getrocknet wird. Der Disk-Fan oder Scheibenlüfter kann dabei stromabwärts oder stromaufwärts des Verdampfers angeordnet sein.

Der Disk-Fan kann auch zum Trocknen eines Luftfilters ausgebildet sein. Klimaanlagen weisen oftmals einen Luftfilter auf, um angesaugte Luft zu reinigen. Ist die angesaugte Luft feucht, z.B. bei Regen oder Nebel wird der Luftfilter durchnässt und es können sich in dem Filter gesundheitsschädliche und/oder geruchsbildende Bakterien bilden. Durch Umkehr der Förderrichtung des Disk-Fan kann der Luftfilter getrocknet und dessen Feuchtigkeit nach außen abgeführt werden, so dass eine Durchkeimung des Luftfilters vermieden oder zumindest gehemmt wird.

In einer besonders vorteilhaften Ausführung kann der Disk-Fan bzw. Scheibenlüfter neben der Funktion der Luftförderung und/oder Luftumlenkung noch zumindest eine weitere Funktion aufweisen. So kann der durch die Heiz- und/oder Klimaanlage beanspruchte Bauraum noch weiter verringert werden.

So kann vorgesehen sein, dass der Disk-Fan als Wasserabscheider ausgebildet ist. Frischluft wird von der Heiz- und/oder Klimaanlage über eine Frischluftansaugöffnung angesaugt, die in einen Wasserkasten zum Abtrennen von mitgeführten Wassertröpfchen mündet. Der Wasserkasten weist üblicherweise mehrere Luftleitelemente auf, die die Luft umlenken und mitgeführtes Wasser abtrennen. Ein solcher Wasserkasten weist infolge der Luftumlenkung einen hohen Luftwiderstand auf und beansprucht sehr viel Bauraum. Es ist vorgesehen, den Disk-Fan zur Luftförderung und Wasserabscheidung im Bereich des Wasserkastens anzuordnen. Durch die Rotation der Scheiben trennt der Disk-Fans die geförderte Luft von mitgeführten Wasserteilchen. Somit kann der Wasserkasten ganz entfallen oder zumindest sehr viel kompakter ausgebildet werden.

In einer Ausführung ist vorgesehen, einen oder mehrere Disk-Fans im Fahrzeuginnenraum als dezentrale Lüfter anzuordnen. Insbesondere können die Disk-Fans zum Umwälzen von Umluft ausgebildet sein, wobei jeder Disk-Fan Umluft in Form einer geschlossenen Walze im Fahrzeuginnenraum umwälzt.

In einer vorteilhaften Ausführung ist der Disk-Fan als Wärmetauscher zum Heizen und/oder Kühlen ausgebildet, indem der Disk-Fan beheizbare und/oder kühlbare Scheiben aufweist. Die Scheiben weisen innigen Kontakt zu der Luft auf, so dass der Widerstand des Wärmeflusses von den rotierenden Scheiben zu der Luft recht gering ist. Aufgrund der hohen Drehzahl der Scheiben ergibt sich ein guter Wärmeübergang zwischen den Scheiben und der Luft. Durch gezieltes Beheizen oder Kühlen einzelner Scheiben des Disk-Fans kann die Luft rasch und effizient erwärmt oder gekühlt werden.

In einer vorteilhaften Ausführung ist vorgesehen, den Disk-Fan als Luftfilter zum Reinigen von Luft auszubilden, indem die Scheiben des Disk-Fans eine vorzugsweise adsorbierende oder ionisierende Beschichtung aufweisen. Die Besichtung kann z.B. Aktivkohle aufweisen, um Gerüche oder Gase zu adsorbieren.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: die Heiz- und/oder Klimaanlage in einem Innenraum eines Kraftfahrzeugs,
- **Figur 2:**: die perspektivische Ansicht eines Disk-Fan mit zentraler Luftansaugöffnung und tangentialer Luftabblasöffnung,
- **Figur 3:**: eine Schnittdarstellung des Disk-Fan mit zentraler Luftansaugöffnung und tangentialer Luftabblasöffnung,
- **Figur 4:**: eine Seitenansicht eines Disk-Fan mit tangentialer Luftansaugöffnung und tangentialer Luftabblasöffnung,
- **Figur 5:**: eine Schnittdarstellung des Disk-Fan mit tangentialer Luftansaugöffnung und tangentialer Luftabblasöffnung.

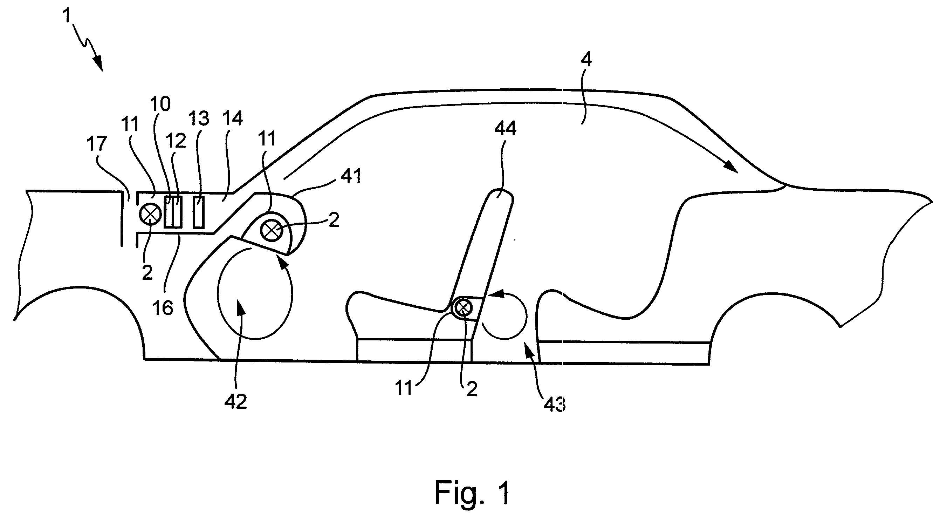

In **Figur 1** ist eine Heiz- und/oder Klimaanlage 1 für den Fahrzeuginnenraum 4 in einem Personenkraftwagen dargestellt. Ein Klimagehäuse 16 ist im Motorraum des Personenkraftwagens angeordnet und beinhaltet einen Luftfilter 15, einen Verdampfer 12, einen Wärmetauscher 13, sowie einen zu einer Luftfördervorrichtung 11 gehörenden Scheibenlüfter 2, der auch als Disk-Fan 2 bezeichnet wird. Der Disk-Fan 2 ist in dem Klimagehäuse 16 stromaufwärts des Luftfilters 15 angeordnet und fördert Außenluft in den Fahrzeuginnenraum 4, die durch einen Wasserkasten 17 in das Klimagehäuse 16 eingesaugt wird. Der Wasserkasten 17 scheidet mit der Außenluft mitgeführtes Wasser ab und weist an seinem unteren Ende einen Wasserablauf auf.

Außenluft wird von dem Disk-Fan 2 angesaugt und durch den Luftfilter 15 und/oder den Verdampfer 13 und/oder den Wärmetauscher 12 hindurch in ein Luftverteilsystem mit einem oder mehreren Luftkanälen 14, die in den Fahrzeuginnenraum 4 führen, gefördert.

In dem Fahrzeuginnenraum 4 ist in dem vorderen Bereich eine Armaturentafel 41 angeordnet, die sich über die Breite des Fahrzeuginnenraumes erstreckt und einen Fahrerfußraum bzw. einen Beifahrerfußraum nach oben begrenzt. Ein Fahrersitz 44 und ein daneben angeordneter Beifahrersitz 44 teilen den Fahrzeuginnenraum 4 in einen vorderen Abschnitt mit Fahrerund Beifahrerfußraum 42 und einen hinteren Abschnitt mit einem Fondfußraum 43 auf.

Im Bereich der Armaturentafel 41 ist ein Disk-Fan 2 der Luftfördervorrichtung 11 verdeckt eingebaut und wälzt Umluft in dem angrenzenden Fahrer- bzw. Beifahrerfußraum 42 in Form einer geschlossenen Walze um. Ein weiterer Disk-Fan 2 ist in dem Fahrersitz bzw. Beifahrersitz 44 verdeckt eingebaut und wälzt Umluft in dem Fondfußraum 43 in Form einer geschlossenen Walze um.

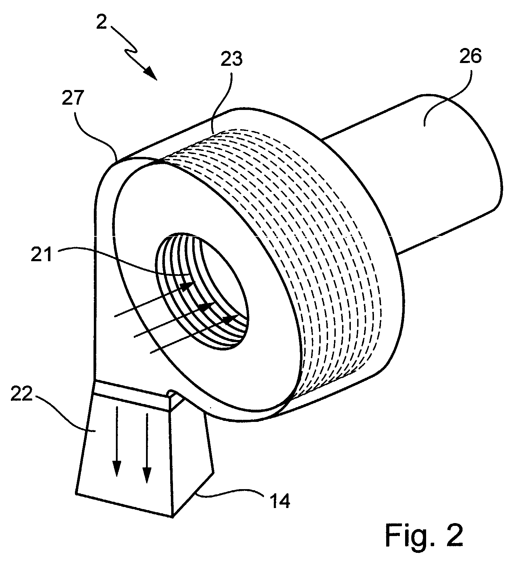

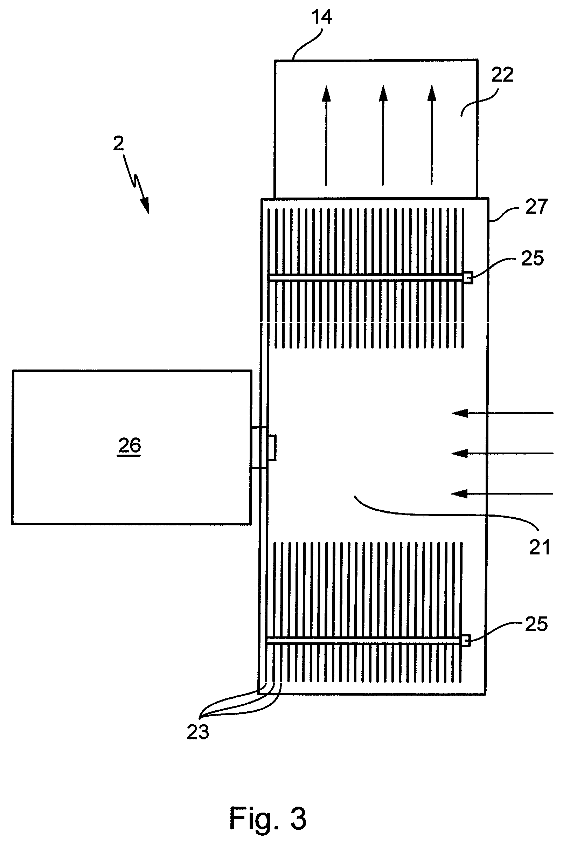

Der Aufbau der Disk-Fans oder Scheibenlüfter 2 ist in den weiteren Figuren dargestellt. In Figur 2 ist ein Disk-Fan oder Scheibenlüfter 2 mit zentraler Ansaug- und tangentialer Förderrichtung in perspektivischer Darstellung und in Figur 3 in Schnittdarstellung gezeigt. Der Disk-Fan 2 weist ein Gehäuse 27 auf, in dem ein Paket aus mehreren runden Scheiben 23 drehbar gelagert ist. Die Scheiben 23 sind parallel und mit Abstand zueinander angeordnet und über Schrauben 25 miteinander verbunden. Die Scheiben können anstatt über Schrauben auch durch kleben oder Fügen oder löten miteinander verbunden sein. Zwischen zwei Scheiben 23 ist jeweils ein Luftspalt ausgebildet. Je nach gewünschter Fördermenge kann das Scheibenpaket des Disk-Fans 2 etwa 20 bis 100 Scheiben aufweisen. Es hat sich gezeigt, dass eine Scheibendicke von 0,2mm bis 1mm und ein Scheibenabstand von 2mm bis 8mm, bei einem Scheibendurchmesser von 5cm bis 30cm ideal sind.

Die erste Scheibe 23 in dem Scheibenpaket ist eine massive Scheibe und drehfest mit einem Antriebsmotor 26 verbunden. Die übrigen Scheiben 23 des Pakets weisen eine konzentrische Aussparung auf, die als Luftansaugöffnung 21 dient. Tangential zu den Scheiben 23 ist eine Luftauslassöffnung 22 in dem Gehäuse 27 angeordnet.

Der elektrische Antriebsmotor 26 versetzt das Paket mit den Scheiben 23 in Rotation. Aufgrund der Wandreibung wird die Luft in Rotation versetzt und durch die Zentrifugalkräfte von der zentralen Ansaugöffnung 21 radial nach außen gefördert. Sie strömt durch die Auslassöffnung 22 aus dem Gehäuse 27 heraus in einen an das Gehäuse 27 anschließenden Luftkanal 14 hinein.

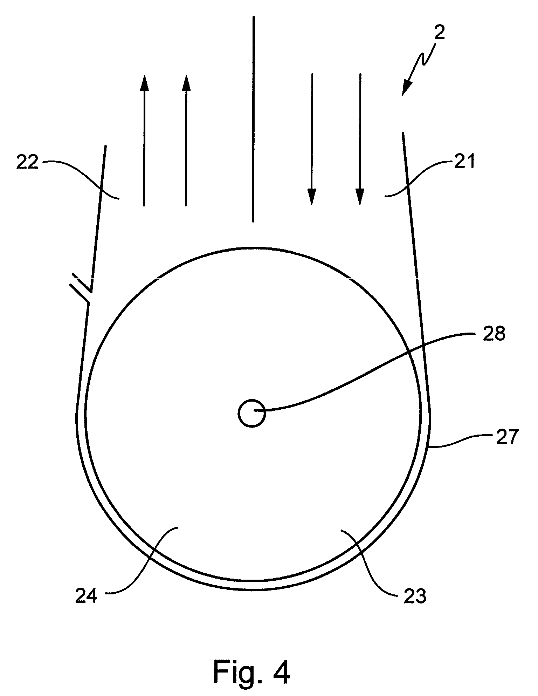

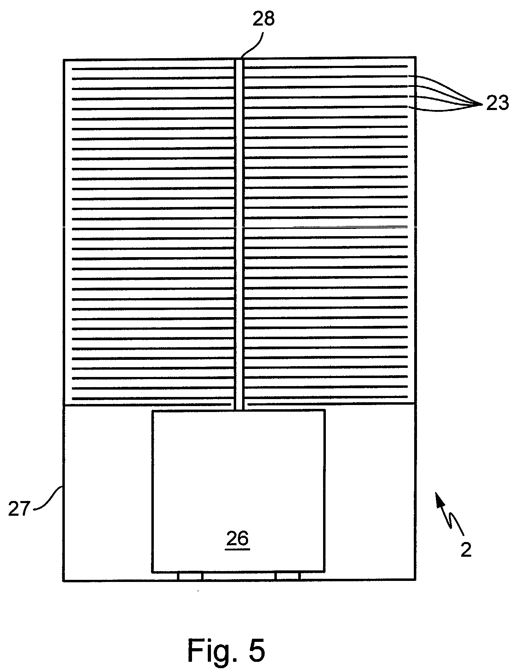

Der Aufbau des Scheibenlüfters oder Disk-Fans 2 mit tangentialer Ansaugöffnung und tangentialer Abblasöffnung ist in **Figur 4** in Draufsicht und in **Figur 5** in Schnittdarstellung gezeigt. Der Disk-Fan 2 weist, ebenso wie bei dem in den Figuren 2 und 3 beschriebenen Aufbau, ein Gehäuse 27 auf, in dem ein Paket aus mehreren runden Scheiben 23 drehbar gelagert ist. Die Scheiben 23 sind parallel und mit Abstand zueinander angeordnet und über Schrauben 25 miteinander verbunden. Zwischen zwei Scheiben 23 ist jeweils ein Luftspalt ausgebildet. Je nach gewünschter Fördermenge kann das Scheibenpaket des Disk-Fans 2 etwa 20 bis 100 Scheiben aufweisen. Es hat sich gezeigt, dass eine Scheibendicke von 0,2mm bis 1mm und ein Scheibenabstand von 2mm bis 8mm, bei einem Durchmesser von 5cm bis 30cm ideal sind.

Im Unterschied zu dem in den Figuren 2 und 3 gezeigten Aufbau sind hier alle Scheiben 23 massiv ohne Aussparung ausgebildet, auf einer gemeinsamen Welle 28 angeordnet und miteinander drehfest verbunden.
Ein Antriebsmotor 26 treibt die Welle 28 an und versetzt so das Paket mit den Scheiben 23 in Rotation.

Das Gehäuse 27 weist an einer Seite zwei Aussparungen auf, die durch eine Trennwand voneinander getrennt sind. Eine der Aussparungen ist als Ansaugöffnung 21 und die andere Aussparung als Abblasöffnung 22 ausgebildet. Die Ansaugöffnung 21 und die Abblasöffnung 22 liegen in einer gemeinsamen Ebene. Dies bedeutet, dass der Disk-Fan die Richtung des geförderten Luftstromes um bis zu 180° ändert. Es sind auch Ausführungen denkbar, bei denen der Disk-Fan die Richtung der geförderten Luft um weniger als 180° ändert.

Die Scheiben 23 des Disk-Fan weisen eine Beschichtung 24 auf, die zum Reinigen der Luft ausgebildet ist und als aktive Komponente Aktivkohle zum adsorbieren von Schadgasen enthält. Einzelne Scheiben 23 sind als Peltierelemente ausgebildet, so dass sie elektrisch Beheizbar und/oder Kühlbar sind, um den Luftstrom zu heizen oder zu kühlen.

Durch die rotierende Bewegung der Scheiben 23 entstehen im Disk-Fan 2 Zentrifugalkräfte, die auf eventuell im Luftstrom vorhandene Wasserteilchen und/oder Staubpartikel wirken und diese von dem Luftstrom abtrennen. Der Disk-Fan kann somit vorteilhaft als Wasserabscheider und/oder Staubfilter im Fahrzeug eingesetzt werden.

Die Luftförderung über die rotierenden Scheiben 23 des Disk-Fan 2 ist recht leise. Der Disk-Fan 2 kann vorteilhaft ohne weitere Maßnahmen zur Geräuschdämmung im Fahrzeug eingesetzt werden.

## Patentansprüche

1. Heiz- und/oder Klimaanlage für einen Fahrzeuginnenraum, mit einer Luftfördervorrichtung sowie einem Wärmetauscher und vorzugsweise einem Verdampfer zum Konditionieren von Luft, wobei die Luftfördervorrichtung von außen angesaugte Frischluft und/oder aus dem Fahrzeuginnenraum angesaugte Umluft über den Wärmetauscher und/oder den Verdampfer und/oder einen Luftkanal oder mehrere Luftkanäle in das Fahrzeuginnere fördert,
**dadurch gekennzeichnet,**
**dass** die Luftfördervorrichtung (11) einen Disk-Fan (2) aufweist.

2. Heiz- und/oder Klimaanlage nach Anspruch 1,
**dadurch gekennzeichnet,**
**dass** der Disk-Fan (2) als tangential ansaugendes und tangential förderndes Luftförderaggregat ausgebildet ist, so dass seine Lufteinlassöffnung (21) und seine Luftauslassöffnung (22) in einer Ebene liegen.

3. Heiz- und/oder Klimaanlage nach Anspruch 1,
**dadurch gekennzeichnet,**
**dass** der Disk-Fan (2) als axial ansaugendes und tangential förderndes Luftförderaggregat ausgebildet ist, so dass seine Lufteinlassöffnung (21) und seine Luftauslassöffnung (22) rechtwinklig zueinander orientiert sind.

4. Heiz- und/oder Klimaanlage nach einem der Ansprüche 1 oder 2,
**dadurch gekennzeichnet,**
**dass** der Disk-Fan (2) wahlweise zum Belüften und/oder Entlüften des Fahrzeuginnenraumes (4) einsetzbar ist, indem seine Förderrichtung umschaltbar ist.

5. Heiz- und/oder Klimaanlage nach einem der Ansprüche 1 bis 4, mit einem Luftfilter zum Reinigen von Luft,
**dadurch gekennzeichnet,**
**dass** der Disk-Fan (2) zum Trocknen des Verdampfers (12) und/oder des Luftfilters (15) ausgebildet ist, indem der Disk-Fan (2) stromabwärts oder stromaufwärts des Verdampfers (12) und/oder des Luftfilters (15) angeordnet ist, so dass der Disk-Fan (2) bei Förderumkehr den Verdampfer bzw. Luftfilter mit aus dem Fahrzeuginnenraum (4) angesaugter Luft beaufschlagt und an dem Verdampfer (12) bzw. Luftfilter (15) vorhandene Feuchtigkeit nach außen abführt.

6. Heiz- und/oder Klimaanlage nach einem der Ansprüche 1 bis 5,
**dadurch gekennzeichnet,**
**dass** der Disk-Fan (2) als Wasserabscheider ausgebildet ist, indem er in der Luft mitgeführte Wassertropfen durch Rotation abtrennt.

7. Heiz- und/oder Klimaanlage nach einem der Ansprüche 1 bis 6,
**dadurch gekennzeichnet,**
**dass** der Disk-Fan (2) als Staubfilter ausgebildet ist, indem er in der Luft mitgeführte Staubpartikel durch Rotation abtrennt.

8. Heiz- und/oder Klimaanlage nach einem der Ansprüche 1 bis 7,
**dadurch gekennzeichnet,**
**dass** der Disk-Fan (2) als separater Lüfter im Fahrzeuginnenraum (4) ausgebildet ist, der vorzugsweise Umluft in Form einer in sich geschlossenen Walze umwälzt.

9. Heiz- und/oder Klimaanlage nach einem der Ansprüche 1 bis 8,
**dadurch gekennzeichnet,**
**dass** die Luftfördervorrichtung mehrere, vorzugsweise zusammenwirkende Disk-Fans (2) aufweist.

10. Heiz- und/oder Klimaanlage nach einem der Ansprüche 1 bis 9,
**dadurch gekennzeichnet,**
**dass** der Disk-Fan (2) als Wärmetauscher ausgebildet ist, indem er einen in die Scheiben eingreifenden Ringwärmetauscher oder elektrische leitende Scheiben (23) oder elektrisch beheizbare Scheiben (23) mit elektrisch leitender Beschichtung (24) aufweist.

11. Heiz- und/oder Klimaanlage nach einem der Ansprüche 1 bis 10,
**dadurch gekennzeichnet,**
**dass** der Disk-Fan (2) als Luftfilter ausgebildet ist, indem er mit einer Funktionsschicht beschichtete Scheiben (23) aufweist, wobei die Funktionsschicht vorzugsweise adsorbierende und/oder ionisierende Eigenschaften aufweist.
